# DEMANDE DE BREVET EUROPEEN

(11) **EP 1 985 519 A2**
(43) Date de publication de la demande: **29.10.2008**
(21) Numéro de dépôt: 08102803.7
(22) Date de dépôt: 20.03.2008
(51) Int. Cl.: B62D 1/16, F16C 19/16, F16C 25/08, F16C 33/41, F16C 33/60

(54) **Dispositif de palier à roulement pour colonne de direction**

(30) Priorité: 27.04.2007 FR 0754759
(71) Demandeur: Aktiebolaget SKF, 415 50 Göteborg (SE)
(72) Inventeur: Delos, Jacques, 45390 DESMONTS (FR); Montboeuf, Bruno, 37390, CERELLES (FR)
(74) Mandataire: Dossmann, Gérard

(57) **Abrégé**

Dispositif de palier à roulement 4 comprenant une bague intérieure (5), deux demi bagues extérieures (7, 8), une rangée d'éléments roulants (6) disposés entre les bagues, une cage (11) de maintien de l'espacement circonférentiel régulier des éléments roulants, une enveloppe (9) à section en U et un élément de précontrainte (10) logé dans l'enveloppe (9), au moins une des demi bagues extérieures (7) comprenant une portion axiale intérieure (7a), une première portion sensiblement oblique (7b) s'étendant radialement vers l'extérieur à partir de la portion axiale et pourvue d'une surface formant un chemin de roulement (7e) pour les éléments roulants. La cage (11) de maintien est disposée axialement entre les deux demi bagues extérieures (7, 8) et pourvue d'une partie de maintien (13) des éléments roulants et d'un talon (12) de support de la partie de maintien disposé radialement à l'extérieur des éléments roulants (6).

## Description

L'invention concerne le domaine des paliers à roulement, notamment les paliers à roulement utilisés dans les colonnes de direction de véhicules automobiles.

Les paliers à roulement peuvent comporter une enveloppe extérieure à section en U et deux demi bagues extérieures en tôle emboutie disposées dans l'enveloppe extérieure, une bague intérieure pourvue d'un chemin de roulement et des éléments roulants, notamment des billes, disposées au contact des chemins de roulement des bagues. On réalise ainsi un roulement à trois ou quatre points de contact capable de fonctionner sous charge axiale, sous charge radiale ou sous charge combinée. Afin que le roulement puisse fonctionner sans jeu, comme cela est généralement requis dans les colonnes de direction, on dispose souvent une rondelle de précontrainte élastique qui vient exercer un effort de précontrainte axiale sur l'une des demi bagues du roulement en supprimant ainsi le jeu interne dudit roulement.

Le document FR 2 594 189 décrit un roulement à billes à précontrainte avec deux demi bagues extérieures emboîtées mobiles librement l'une dans l'autre.

Le document FR 2 730 282 décrit un roulement à deux demi bagues extérieures et deux éléments élastiques dans une enveloppe à résistance axiale limitée.

Le document DE A 42 29 199 décrit un roulement à deux demi bagues extérieures disposées dans une enveloppe en U, les demi bagues possédant une portion axiale extérieure et une portion arrondie intérieure coopérant avec un élément élastique.

Le document US 3 801 171 décrit un roulement à deux demi bagues extérieures disposées dans une enveloppe, chaque demi bague comportant une portion axiale extérieure, une portion radiale intermédiaire et une portion oblique intérieure. I1 en résulte un encombrement radial élevé.

Le document WO 94/03737 décrit un roulement à jeu nul pourvu d'une enveloppe de forme complexe formant un chemin de roulement extérieur, une demi bague extérieure formant un autre chemin de roulement extérieur et coopérant avec un élément élastique. La demi bague est munie d'une portion radiale extérieure, une portion axiale intérieure, et d'une portion oblique intermédiaire formant le chemin de roulement. Les billes sont maintenues par une cage s'étendant axialement de part et d'autre des billes située radialement entre la demi bague extérieure et une bague intérieure.

Un inconvénient de ce type de roulement réside dans le fait qu'il comporte un assez grand nombre de pièces.

La présente invention se propose de remédier aux inconvénients évoqués ci-dessus.

La présente invention propose un roulement dit « sans jeu », compact axialement, économique à fabriquer et pouvant comporter une cage.

Le dispositif de palier à roulement comprend une bague intérieure, deux demi bagues extérieures, une rangée d'éléments roulants disposés entre les bagues et au contact de celles-ci, une enveloppe à section en U, une cage de maintien de l'espacement circonférentiel régulier des éléments roulants, et un élément de précontrainte logé dans l'enveloppe. Au moins une des demi bagues extérieures comprend une portion axiale intérieure, une première portion oblique s'étendant radialement vers l'extérieur à partir de la portion axiale et pourvue d'une surface formant chemin de roulement pour les éléments roulants.

Selon une caractéristique générale, la cage de maintien est disposée axialement entre les deux demi bagues extérieures et est pourvue d'une partie de maintien des éléments roulants et d'un talon de support de la partie de maintien disposé radialement à l'extérieur des éléments roulants.

Dans un mode de réalisation, au moins une des demi bagues extérieures comprend une deuxième portion oblique s'étendant radialement vers l'extérieur à partir de la première portion oblique et axialement en sens opposé. En d'autres termes, les première et deuxième portions obliques présentent une forme de chevron en coupe par un plan contenant l'axe du dispositif. La pointe du chevron est située radialement à l'extérieur des éléments roulants et laisse un espace axial suffisant pour y disposer le talon de support de la cage.

Dans un mode de réalisation, l'enveloppe comprend un fond axial et deux branches radiales d'un côté et de l'autre du fond axial. Les branches radiales peuvent être de longueurs inégales.

Dans un mode de réalisation, au moins une des demi bagues extérieures comprend une portion radiale s'étendant dans le même sens que la deuxième portion oblique à partir de la dite deuxième portion oblique. La portion radiale peut présenter une dimension radiale inférieure à 20 % de la dimension radiale de la section de bague.

Dans un mode de réalisation, les deux demi bagues extérieures sont identiques. Les coûts de fabrication s'en trouvent réduits. La distance axiale entre les demi bagues extérieures peut être comprise entre 50 et 80 % du diamètre des éléments roulants, par exemple des billes.

La cage peut comprendre un matériau synthétique, éventuellement renforcé de fibres de verre, par exemple du nylon. La partie de maintien de la cage peut délimiter des alvéoles pour les éléments roulants, la partie de maintien étant de dimension axiale supérieure à la dimension axiale du talon. La cage peut ainsi se maintenir axialement par rapport aux éléments roulants. La partie de maintien peut présenter une forme générale toroïdale.

Dans un mode de réalisation, l'élément de précontrainte comprend une rondelle élastique axialement à section rectangulaire, par exemple carrée. La rondelle élastique peut être en appui contre une branche de l'enveloppe. En d'autres termes, une des demi bagues peut être en appui contre l'une des branches de l'enveloppe, l'autre demi bague étant en appui contre la rondelle élastique elle-même en appui contre l'autre branche de l'enveloppe.

Dans un mode de réalisation, l'élément de précontrainte est en contact avec la première portion oblique et avec une extrémité de grand diamètre de ladite demi bague. L'élément de précontrainte offre un appui réduisant les risques de déformation de la demi bague correspondante.

Dans un mode de réalisation, l'une des demi bagues comprend une extrémité de grand diamètre en contact avec un rebord de l'enveloppe.

Dans un mode de réalisation, ladite demi bague s'étend sur une distance axiale d entre un plan radial tangent aux éléments roulants et un plan radial tangent au raccordement convexe entre les première et deuxième portions obliques et sécant avec les éléments roulants. La distance axiale d est comprise entre 10 % et 30 % du diamètre des éléments roulants. On laisse subsister un espace axial libre sur le pourtour extérieur des éléments roulants, d'où la possibilité d'y disposer le talon de la cage.

Dans un de mode de réalisation, le palier à roulement comprend une bague intérieure, deux demi bagues extérieures, une rangée de billes disposées entre les bagues, une cage de maintien de l'espacement circonférentiel régulier des billes, une enveloppe présentant un fond axial et deux rebords radiaux, et un élément élastique logé dans l'enveloppe, les deux demi bagues extérieures étant également logées dans l'enveloppe. Au moins une des demi bagues extérieures comprend une portion axiale intérieure, une première portion oblique s'étendant radialement vers l'extérieur à partir de la portion axiale et formant un chemin de roulement pour les éléments roulants, et une deuxième portion oblique s'étendant radialement vers l'extérieur à partir de l'extrémité de grand diamètre de la première portion oblique. La deuxième portion oblique s'étend axialement en sens opposé à la première portion oblique. La cage comprend une partie de maintien des billes et un talon supportant la partie de maintien et disposé à proximité de la jonction entre les première et deuxième portions obliques.

Une colonne de direction peut comprendre un logement, un arbre et un dispositif de palier à roulement tel que décrit ici.

Un procédé de montage de roulement peut comprendre les étapes suivantes :
- on dépose une rondelle élastique contre une face radiale d'une enveloppe à section en L, on dispose une demi bague extérieure sur la rondelle élastique dans l'enveloppe,
- on assemble un autre sous-ensemble bague intérieure, cage et billes,
- on amène ledit autre sous-ensemble dans l'enveloppe, les billes venant en contact avec la demi bague extérieure, puis on amène une autre demi bague extérieure en contact avec les billes et on rabat l'extrémité libre de la portion axiale de l'enveloppe pour former un rebord sensiblement radial.

Grâce à l'invention, on bénéficie d'un roulement pour colonne de direction à frottement réduit grâce à la présence d'une cage. La cage peut comprendre un matériau synthétique à faible coefficient de frottement. Le roulement comprend un faible nombre de pièces de fabrication et de montage simples et économiques.

La bague intérieure du roulement peut être du type à gorge profonde, obtenue par usinage avec enlèvement de copeaux ou en tôle, obtenue par emboutissage.

La présente invention sera mieux comprise à la lecture de la description détaillée de quelques modes de réalisation pris à titre d'exemples nullement limitatifs et illustrés par les dessins annexés, sur lesquels :
- la figure 1 est une vue partielle en coupe axiale d'une colonne de direction ;
- la figure 2 est une demi vue axiale d'un palier à roulement ; et
- la figure 3 est une vue en perspective de la cage du roulement de la figure 2.

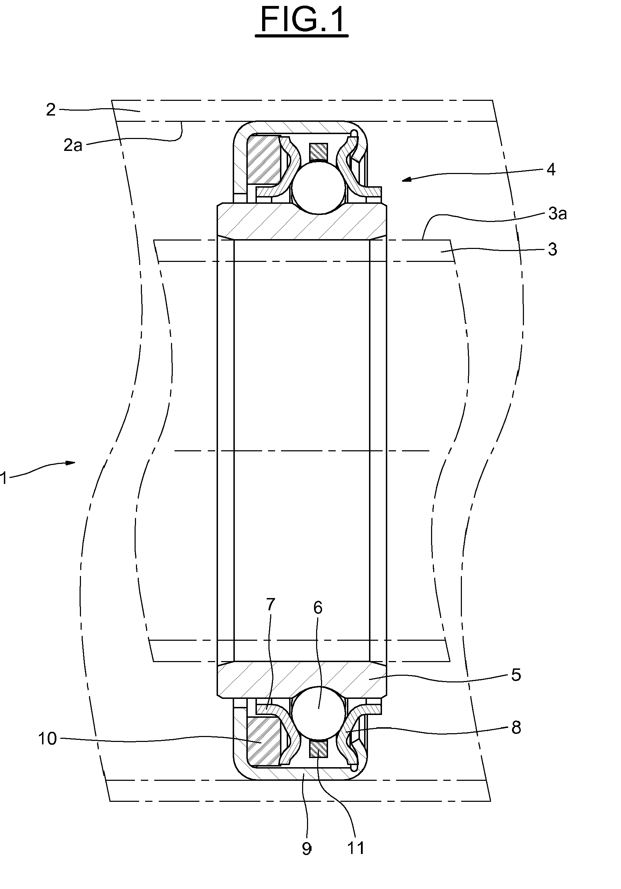

Comme on peut le voir sur la figure 1, la colonne de direction 1 comprend un logement tubulaire 2 stationnaire, un arbre 3 tubulaire disposé dans le logement 2 et susceptible de tourner par rapport au logement 2, représentés en traits mixtes, et un palier à roulement 4 disposé entre l'alésage 2a du logement tubulaire 2 et la surface extérieure cylindrique 3a de l'arbre 3. L'arbre permet de transmettre un mouvement de rotation, par exemple imprimé par le conducteur au volant de direction auquel est relié l'arbre 3. L'arbre 3 transmet le mouvement à un organe de direction, par exemple une crémaillère.

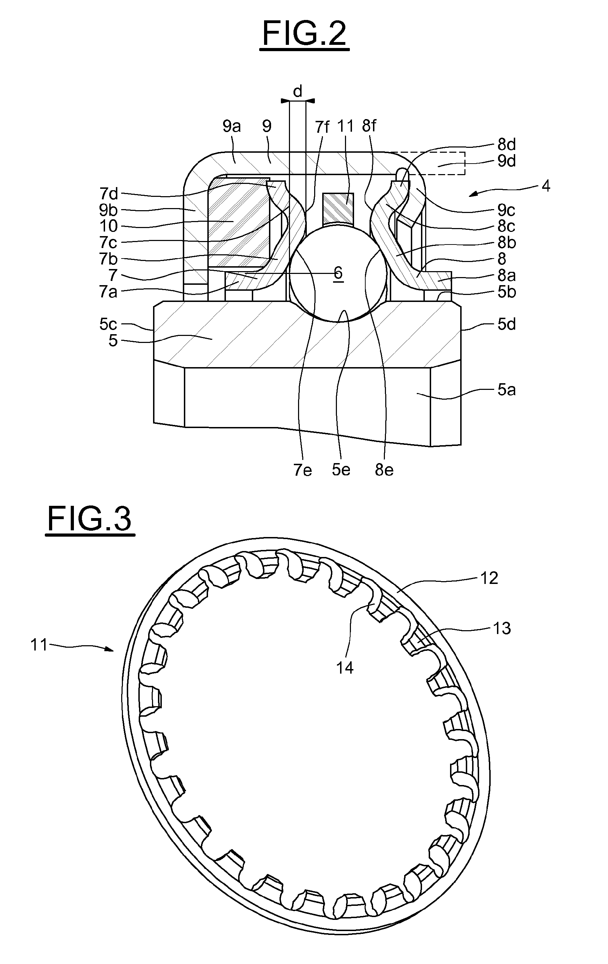

Comme on le voit sur les figures 1 et 2, le palier à roulement 4 comprend une bague intérieure 5, une rangée d'éléments roulants 6, par exemple des billes, deux demi bagues extérieures 7 et 8, une enveloppe 9 et un élément de précontrainte 10. Une cage 11 de maintien de l'espacement circonférentiel régulier des éléments roulants 6 est également prévue. La bague intérieure 5 peut être réalisée à partir d'une ébauche en forme de portion de tube. La bague intérieure 5 est munie d'un alésage 5a qui peut être monté, par exemple par emmanchement serré sur la surface extérieure 3a de l'arbre 3, d'une surface extérieure axiale 5b et de deux surfaces latérales radiales 5c et 5d. Une piste de roulement 5e est ménagée, par exemple par usinage par enlèvement de copeaux, à partir de la surface extérieure 5b. Le chemin de roulement 5e peut présenter une section de forme générale toroïdale, par exemple symétrique par rapport à un plan radial passant par le centre des éléments roulants 6.

Les demi bagues extérieures 7 et 8 sont avantageusement identiques, ce qui permet une diminution des coûts de fabrication par allongement des séries. Les demi bagues extérieures 7 et 8 sont montées d'un côté et de l'autre de la rangée d'éléments roulants 6 tout en étant disposées au moins en partie dans l'enveloppe 9. Les demi bagues extérieures 7 et 8 sont symétriques l'une par rapport à l'autre en considérant le plan radial passant par le centre des éléments roulants 6. Les demi bagues extérieures 7, 8 comprennent une portion sensiblement axiale de petit diamètre 7a, 8a, une première portion sensiblement oblique 7b, 8b s'étendant radialement vers l'extérieur à partir d'une extrémité de la portion axiale 7a, 8a en direction des éléments roulants 6, et une deuxième portion oblique 7c, 8c s'étendant radialement vers l'extérieur à partir de l'extrémité de grand diamètre de la première portion oblique 7b, 8b et axialement en sens opposé à la première portion oblique 7b, 8b. La deuxième portion oblique 7c, 8c accroît la rigidité de la première portion oblique 7b, 8b. En outre, et à titre optionnel, la demi bague extérieure 7, 8 se prolonge au-delà de la deuxième portion oblique 7c, 8c par une courte portion radiale 7d, 8d. La surface intérieure des premières portions obliques 7b, 8b forme un chemin de roulement 7e, 8e pour les éléments roulants 6. A titre de variante, on peut prévoir que la première portion sensiblement oblique 7b, 8b présente un profil légèrement arqué en vue d'une forme concordant plus avec la surface des éléments roulants 6. En d'autres termes, la première portion sensiblement oblique 7b, 8b peut présenter une forme oblique ou légèrement toroïdale.

Dans une autre variante de réalisation, la seconde portion oblique 7c, 8c pourrait être remplacée par une portion radiale s'étendant radialement en direction d'une portion axiale 9a de l'enveloppe 9.

L'élément de précontrainte 10 se présente sous la forme d'une rondelle annulaire de section rectangulaire à l'état libre en contact par une surface radiale avec l'enveloppe 9, par une surface radiale opposée avec la portion radiale 7d d'extrémité de la demi bague extérieure 7 et, par un coin de petit diamètre, avec la surface extérieure de la première portion oblique 7b de la demi bague extérieure 7. L'enveloppe 9 se présente sous la forme d'une coupelle annulaire à section générale en U. Grâce à sa forme simple à section droite rectangulaire, l'élément de précontrainte 10 peut être obtenu de manière économique par tronçonnage d'un tube extrudé, réalisé par exemple en un matériau polymère. L'enveloppe 9 comprend la portion axiale 9a, une première branche radiale 9b en contact avec l'élément de précontrainte 10 et une deuxième branche 9c s'étendant radialement vers l'extérieur à partir de l'extrémité de la portion axiale 9a opposée à la première portion radiale 9b. La portion 9c présente une dimension radiale inférieure à celle de la portion radiale 9b et peut être légèrement incurvée. La portion 9c est en contact avec la portion radiale 8d d'extrémité extérieure de la demi bague extérieure 8.

Les demi bagues extérieures 7 et 8 sont disposées en sens opposé de telle sorte que les chemins de roulement 7e et 8e soient en face l'un de l'autre et en contact avec les éléments roulants 6. L'angle de la première portion oblique 7b, 8b peut être relativement élevé, par exemple supérieur à 45° afin de réduire leur encombrement axial. De même, la pente des portions sensiblement obliques de grand diamètre 7c, 8c peut être supérieure à 45°, voire même supérieure à 60°. Les demi bagues extérieures 7 et 8 laissent donc subsister un espace annulaire libre s'étendant radialement entre les éléments roulants 6 et l'alésage du fond axial 9a de l'enveloppe 9 et axialement entre lesdites demi bagues extérieures 7 et 8, plus précisément entre les portions radiales d'extrémité 7d et 8d, entre les portions sensiblement oblique de grand diamètre 7c et 8c et pour partie entre les portions sensiblement obliques de petit diamètre 7b et 8b.

Le raccordement entre les portions 7b, 8b de petit diamètre d'une part, et les portions de grand diamètre 7c, 8c d'autre part, se fait par une portion annulaire présentant du côté intérieur une surface convexe 7f, 8f présentant entre elles la plus faible distance axiale entre les demi bagues 7 et 8. La distance entre les surfaces convexes (en coupe axiale) 7f et 8f peut être comprise entre 40 et 80 % du diamètre des éléments roulants 6, préférablement entre 50 et 70 %.

Dans l'espace ainsi libéré, la cage 11 est disposée.

Mieux visible sur la figure 3, la cage 11 comprend un talon annulaire 12 supportant une partie de maintien 13 dans laquelle sont ménagées une pluralité d'alvéoles 14 pour les éléments roulants 6, tels que des billes. Les alvéoles 14 sont ouvertes sur les côtés et vers l'intérieur. Le talon 12 est disposé à l'extérieur de la partie de maintien 13. Le talon 12 peut présenter une section rectangulaire, voire carrée, en coupe axiale. La partie de maintien 13 peut présenter une section arrondie ou polygonale en coupe axiale avec des congés de raccordement sur le talon 12. Les alvéoles 14 sont en nombre supérieur ou égale à celui des éléments roulants 6 et permettent de définir circonférentiellement la disposition des éléments roulants 6 en évitant leur contact mutuel générateur de frottement et d'usure. La partie de maintien 13 peut présenter une dimension axiale supérieure à celle du talon 12, par exemple comprise entre 140 et 180% de la longueur axiale du talon 12. La dimension radiale de la partie de maintien 13 peut être comprise entre 30% et 65% du diamètre des éléments roulants 6. La cage 11 assure ainsi le maintien en place des éléments roulants 6 avant montage et lors du fonctionnement du palier à roulement dans la colonne de direction 1. La cage 11 est préférablement réalisée en matériau synthétique dont la surface présente un faible coefficient de frottement. La cage 11 peut comprendre un polyamide comportant éventuellement une charge minérale, par exemple de type PA 6.6.

Grâce aux dimensions axiale et radiale de la partie de maintien 13, la cage 11 peut être capable d'assurer le maintien des éléments roulants 6 par rapport à ladite cage 11 avant le montage, en d'autres termes indépendamment des autres pièces du palier à roulement 4.

Dans le mode de réalisation représenté, l'élément de précontrainte 10 est disposé entre la demi cage extérieure 7 et la portion radiale 9b. Toutefois, l'élément de précontrainte 10 peut être disposé entre la demi bague extérieure 8 et le rebord 9c. Dans ce cas, la portion radiale 9b peut être plus courte pour laisser passer la portion axiale 7a de la demi bague extérieure 7. Alternativement, l'enveloppe 9 et la demi bague extérieure 7 peuvent être réalisées de façon monobloc.

Les demi bagues extérieures 7 et 8 se présentent mutuellement sous la forme de deux chevrons à pointes arrondies se faisant face, pointes entre lesquelles le talon 12 de la cage 11 est installé. Les demi bagues extérieures 7 et 8 présentent une rigidité convenable grâce à la portion axiale 7a, 8a de petit diamètre et à la deuxième portion sensiblement oblique 7c, 8c de grand diamètre qui joue le rôle de nervure de rigidification de la portion sensiblement oblique 7b, 8b qui forme le chemin de roulement 7e, 8e. Les demi bagues extérieures 7 et 8 sont avantageusement identiques et peuvent être réalisées par emboutissage d'un flan de tôle. Grâce à la forme évasée des portions obliques des demi bagues extérieures, on dispose de la place nécessaire pour disposer une cage à talon extérieur. Par ailleurs, les portions axiales 7a et 8a des demi bagues extérieures 7 et 8 peuvent former un passage étroit avec la surface extérieure 5b de la bague intérieure 5, d'où une excellente étanchéité du palier à roulement 4.

Il peut être procédé au montage du palier à roulement de la façon suivante. Dans une première étape, on prend une ébauche d'enveloppe 9 dont la portion 9c n'est pas encore rabattue et se présente par un prolongement axial 9d au-delà de la portion axiale 9a. On amène l'élément de précontrainte 10 dans la coupelle en contact avec la portion radiale 9d. On amène ensuite, toujours par un simple mouvement axial, la demi bague extérieure 7 en contact avec l'élément de précontrainte 10. On obtient ainsi un premier sous-ensemble qui peut avantageusement reposer par la portion radiale 9b sur une surface horizontale de support.

Parallèlement au montage du premier sous-ensemble, on peut former un deuxième sous-ensemble par assemblage de la bague intérieure 5, des éléments roulants 6 et de la cage 11. Les éléments roulants 6 étant répartis autour du chemin de roulement 5e de la bague intérieure 5, la cage 11 peut venir se clipser sur les éléments roulants 6 par un mouvement axial. On obtient ainsi un deuxième sous-ensemble que l'on peut assembler avec le premier sous-ensemble en mettant les éléments roulants 6 en contact avec le chemin de roulement 7e de la demi bague extérieure 7 et en faisant passer une partie de la bague intérieure 5 dans l'alésage de la portion axiale 7a de la demi bague extérieure 7.

Ensuite, on amène la demi bague extérieure 8 par un mouvement axial. La demi bague extérieure 8 vient en contact avec les éléments roulants 6 par son chemin de roulement 8e. Puis on rabat le prolongement 9d vers l'intérieur pour lui conférer la forme d'un rebord 9c s'étendant radialement vers l'intérieur et assurant le maintien de la demi bague extérieure 8, en contact avec la portion radiale 8d d'extrémité de la demi bague 8 ou avec la portion sensiblement oblique de grand diamètre 8c de la demi bague extérieure 8.

Le montage du palier à roulement 4 dans la colonne de direction 1 peut s'effectuer avec un emmanchement serré de la bague intérieure 5 sur l'arbre 3, par exemple en poussant sur l'une des surfaces latérales 5c ou 5d. Le montage dans le logement tubulaire 2 peut là encore être effectué par emmanchement en poussant sur l'enveloppe 9, par exemple sur la portion radiale 9b ou encore sur le rebord 9c.

Grâce à l'invention, on bénéficie d'un palier à roulement de fabrication économique, présentant un faible nombre de pièces et une usure et un couple de frottement réduits grâce à la possibilité de monter une cage.

## Revendications

1. Dispositif de palier à roulement (4) comprenant une bague intérieure (5), deux demi bagues extérieures (7, 8), une rangée d'éléments roulants (6) disposés entre les bagues et au contact de celles-ci, une cage (11) de maintien de l'espacement circonférentiel régulier des éléments roulants, une enveloppe (9) à section en U et un élément de précontrainte (10) logé dans l'enveloppe (9), au moins une des demi bagues extérieures (7) comprenant une portion axiale intérieure (7a), une première portion sensiblement oblique (7b) s'étendant radialement vers l'extérieur à partir de la portion axiale et pourvue d'une surface formant un chemin de roulement (7e) pour les éléments roulants, **caractérisé en ce que** la cage (11) de maintien est disposée axialement entre les deux demi bagues extérieures (7, 8) et pourvue d'une partie de maintien (13) des éléments roulants et d'un talon (12) de support de la partie de maintien disposé radialement à l'extérieur des éléments roulants (6).

2. Dispositif selon la revendication 1, dans lequel ladite au moins une des demi bagues extérieures (7) comprend une deuxième portion sensiblement oblique (7c) s'étendant radialement vers l'extérieur à partir de la première portion oblique (7b) et axialement en sens opposé.

3. Dispositif selon la revendication 2, dans lequel ladite au moins une des demi bagues extérieures comprend une portion radiale (7d) s'étendant dans le même sens que la deuxième portion sensiblement oblique à partir de ladite deuxième portion sensiblement oblique (7c).

4. Dispositif selon la revendication 2 ou 3, dans lequel ladite demi bague (7) s'étend sur une distance axiale d entre un plan radial tangent aux éléments roulants (6) et un plan radial tangent aux première et deuxième portions sensiblement obliques (7b, 7c) et sécant avec les éléments roulants (6), la distance axiale d étant comprise entre 10 % et 30 % du diamètre des éléments roulants (6).

5. Dispositif selon l'une quelconque des revendications précédentes, dans lequel les deux demi bagues extérieures (7, 8) sont identiques.

6. Dispositif selon l'une quelconque des revendications précédentes, dans lequel la partie de maintien (13) délimite des alvéoles (14) pour les éléments roulants (6), la partie de maintien (13) étant de dimension axiale supérieure à la dimension axiale du talon (12).

7. Dispositif selon l'une quelconque des revendications précédentes, dans lequel l'élément de précontrainte (10) comprend une rondelle élastique axialement à section rectangulaire.

8. Dispositif selon l'une quelconque des revendications précédentes, dans lequel l'élément de précontrainte (10) est en contact avec la première portion oblique (7b) et avec une extrémité de grand diamètre de ladite demi bague (7).

9. Dispositif selon l'une quelconque des revendications précédentes, dans lequel l'une desdites demi bagues comprend une extrémité de grand diamètre en contact avec un rebord de l'enveloppe (9).

10. Colonne de direction (1) comprenant un logement (2), un arbre (3) et un dispositif selon l'une quelconque des revendications précédentes monté entre le logement et l'arbre.
